# EUROPEAN PATENT SPECIFICATION

(11) **EP 1 985 190 B1**
(45) Date of publication and mention of the grant of the patent: **10.03.2010**
(21) Application number: 06831653.8
(22) Date of filing: 06.12.2006
(51) Int. Cl.: A23K 1/14, A23K 1/16, A23K 1/18

(54) **FEED ADDITIVE AND A METHOD FOR THE PRODUCTION THEREOF**
FUTTERMITTELZUSATZSTOFF UND VERFAHREN ZU SEINER HERSTELLUNG
ADDITIF ALIMENTAIRE ET PROCEDE DE FABRICATION

(30) Priority: 07.12.2005 RU 2005138087; 27.02.2006 US 777009 P
(43) Date of publication of application: 29.10.2008
(73) Proprietor: OOO DELSI, St. Petersburg 197198 (RU)
(72) Inventor: EISENSHTADT, Natalya, Ilyinichna, St.Petersburg 197343 (RU); BOSENKO, Margarita, Serafimovna, St.Petersburg 195176 (RU); VILESOV, Aleksandr, Dmitrievich, St.Petersburg 197046 (RU); VILESOVA, Marina, Sergeevna, St.Petersburg 197046 (RU); STEPANOV, Roman, Vladimirovich, St.Petersburg 198207 (RU); STANKEVICH, Richard, Petrovich, St.Petersburg 195297 (RU); SUVOROVA, Olga, Mikhailovna, St.Petersburg 195271 (RU); CHUKOVA, Larisa, Petrovna, St.Petersburg 198207 (RU); NECHAEVA, Elena, Avgustovna, Novosibirsk 630559 (RU)
(74) Representative: Mallalieu, Catherine Louise
(86) International application number: PCT/IB2006/003492
(87) International publication number: WO 2007/083183

(56) References cited:
- DATABASE WPI Week 199526 Derwent Publications Ltd., London, GB; AN 1995-198177 XP002449537 & RU 2 021 736 C1 (BOSENKO M S) 30 October 1994 (1994-10-30) cited in the application
- DATABASE FSTA [Online] INTERNATIONAL FOOD INFORMATION SERVICE (IFIS), FRANkFURT-MAIN, DE; 2003, EUN LEE: "Effects of powdered pine needle (Pinus densiflora Sieb et Zucc.) on serum and liver lipid composition and antioxidative capacity in rats fed high oxidized fat." XP002449533 Database accession no. 2003-00-t1164 & JOURNAL OF THE KOREAN SOCIETY OF FOOD SCIENCE AND NUTRITION, vol. 32, no. 6, 2003, pages 926-930,
- DATABASE FSTA [Online] INTERNATIONAL FOOD INFORMATION SERVICE (IFIS), FRANkFURT-MAIN, DE; 1977, GRUNBERG R ET AL: "Intensification of egg yolk colour by means of supplements in the diet of hens." XP002449534 Database accession no. 77-2-02-q0018 & REVISTA DE CRESTEREA ANIMALELOR, vol. 26, no. 2, 1976, page 32,
- DATABASE WPI Week 199618 Derwent Publications Ltd., London, GB; AN 1996-178181 XP002449538 & RU 2 041 646 C1 (KRASY TECHN ACAD) 20 August 1995 (1995-08-20) cited in the application

## Description

The invention relates to the field of the production of feed additives and can be used as biologically active feed additives in food rations used in poultry farming, animal husbandry, fur farming, and fish farming.

A method is known for the production of products from needle-bearing conifer wood, for example, a natural conifer extract, chlorophyll-carotene paste, and conifer vitamin meal (Russian Patent No. RU 2041646, A23K1/00, 12/30/1992). The method specifies a two-stage extraction of needle-bearing wood from the fir and pine. This increases the yield of extractable substances, while protecting the biologically active substances from disintegration, and permits the more effective utilization of the waste needle-bearing wood.

The obtained extracts can be used later in food rations for poultry, animals, and fur-bearing animals.

A method is known for the processing of coarse plant material, specifically needles, into highly nutritional feed with an increased protein content (Russian Patent No. RU 2088106, A23K1/12, 3/24/1995). The substance of the method is as follows. The needle/twig material (NTM) is ground into particles, 5 x (4-6) cm in size, and then processed in a disperser for 7-10 minutes and separated into phases; the solid phase of the NTM is inoculated with the fungal strain Pleurotus ostreatus (Fr) and the culturing proceeds for 16 days.

The conifer feed additive has a specific conifer odor and an unpleasant burning aftertaste, which must be masked so that animals can easily consume these substances. In addition, the metering in of the paste-like substances and their uniform distribution in dry feed is problematic in view of their viscous consistency.

To mask the odor and taste of conifer needle extracts and also for the convenience and uniformity of their metering in at low concentrations, these products were microencapsulated.

The microencapsulation of conifer needle extracts in a membrane, containing gelatin and a tanning agent, is known (Russian Patent No. RU 2021736, 7/15/1993, A23K 1/00, 1/14); the ratio of ingredients is as follows, % by weight: conifer needle extract 75.0-92.0, gelatin 5.0-20.0, and tanning agent 0.5-5.0.

In this patent, the water-insoluble product, obtained by the extraction of conifer needles with use of organic solvents (benzene), after separation of waxes from the extracts and removal of the solvent and essential oils is used as the basic biologically active substance (BAS). Microencapsulation is done by the formation of membranes of water-soluble polymer-gelatin in an aqueous medium on the surface of particles (cores) of the conifer needle concentrate, first dispersed in the aqueous medium to sizes of 100-2000 µm. This is followed by the stages of tanning of the membrane, washing of the capsules, isolation of the microcapsules, and drying. The obtained microencapsulated preparation is stable in the acidic medium of gastric juice, but hydrolyzes readily in the alkaline medium of the intestine, where BAS are assimilated. This preparation is effective, as has been demonstrated in examples in which the quality of fur production in mink and the meat production in chickens were increased.

Despite the positive results obtained with the use of microencapsulation, the known method has a number of major limitations and drawbacks:
- The technical process is expensive because of the multiple stages and the duration of the stages.
- There is a large amount of wastewater, which requires disposal because it cannot be reused.
- There is great variation in the basic physicochemical parameters of the raw material (due to seasonal variations, nature of the raw material, and growing area), necessitating constant adjustment of the technological process at the stages of emulsion production and creation of the microcapsule membranes.

The objective of this invention is to overcome the aforementioned drawbacks of the feed additive production process.

This objective is achieved as follows: The method for producing the feed additive is based on the processed conifer needle extracts and is different from the original method in that it uses the microgranulation of the neutralized conifer needle extract with a water-soluble polymer matrix/binding agent in the form of an aqueous solution, which is combined with the extract, and the obtained mixture is then added dropwise to an aqueous solution of a crosslinking agent, whereby sodium alginate or a protein/anionic polysaccharide complex, consisting of gelatin and sodium alginate, is used as the polymer matrix/binding agent, and water-soluble calcium salts are used as the crosslinking agent (the calcium salts ensure the obtainment of an insoluble matrix of microgranules), or a protein/anionic polysaccharide complex, consisting of gelatin and sodium alginate, is used as the polymer matrix/binding agent and water-soluble iron salts are used as the crosslinking agent (the iron salts ensure the obtainment of an insoluble matrix of microgranules).

The obtained dried granules contain the following components, % by weight (in terms of dry matter):

| | |
|---|---|
| Extracts from conifer needles | 70-90 |
| Polymer matrix/binding agent | 9-25 |
| Crosslinking agent (in terms of calcium ions Ca²⁺) | 0.04-0.10 or |
| Crosslinking agent (in terms of iron ions Fe³⁺) | 0.05-0.5. |

The polymer matrix/binding agent contains sodium alginate or sodium alginate with gelatin in a weight ratio of 4:1 to 3:2, with the following ratio of components, % by weight: sodium alginate 9-25; gelatin 0-10.

The polymer matrix/binding agent contains sodium alginate with gelatin, in a weight ratio of 4:1 to 3:2, with the following ratio of components, % by weight: sodium alginate 6-18; gelatin 2-12.

Examples of the calcium ion (Ca²⁺) source are water-soluble or partially water-soluble calcium salts and various inorganic acids, for example, calcium dichloride and calcium glycerophosphate, and also organic acids, such as aliphatic acids, for example, calcium acetate, hydroxy acids, for example, lactic and gluconic acids, and aromatic acids, for example, benzoic, salicylic, and acetyl-o-salicylic acids, in concentrations necessary to ensure a calcium ion (Ca²⁺) concentration within the range of 0.4-1.0% by weight in the bath with the crosslinking agent solution.

Water-soluble or partially water-soluble iron salts and inorganic acids, for example, hydrochloric and sulfuric acid, are used as the source of iron ions Fe³⁺. This includes mixed salts of the alum type in concentrations necessary to achieve an iron ion (Fe³⁺) concentration within the range of 0.5-5.0% by weight in the bath with the crosslinking agent solution.

Extracts obtained from needles of various conifer species with the use of various extracting agents can be used in the proposed method as conifer needle extracts. The obtained extracts are converted to the water-soluble form via neutralization with an aqueous sodium hydroxide solution to pH values = 8-10, and they are thereby converted into aqueous pastes. The primary ingredients for the feed additive in these pastes are chlorophyll and chlorophyll derivatives, carotene and carotenoids, flavonoids, polyprenols, and also vitamins K, C, P, group B vitamins, and tocopherol (provitamin E).

Microgranulation of the neutralized conifer needle extract is performed using the water-soluble polymer matrix/binding agent, which is combined with the extract, and then the combined system, which represents a mixture of the neutralized conifer needle extract and the polymer matrix/binding agent in the form of an aqueous solution, is added dropwise to an aqueous solution of the crosslinking agent.

Two methods are possible for the production of the feed additive:
- In the first method, either an aqueous solution of sodium alginate or a protein/anionic polysaccharide complex consisting of gelatin and sodium alginate (taken in a ratio by weight of 4:1 to 3:2), is used as the water-soluble polymer matrix/binding agent, and water-soluble calcium salts are used as the crosslinking agent. The latter assure the obtainment of an insoluble polymer matrix of microgranules due to the reaction between calcium ions Ca²⁺ with the carboxyl groups of sodium alginate.
   We established that the reaction of calcium ions Ca²⁺ with the acid groups happens almost instantaneously, creating, on the surface of the microgranule, barriers that prevent the further deeper penetration of Ca²⁺ ions into the microgranule and the formation of a more densely crosslinked net-like structure. Gelatin plays the role of a regulator of microgranule disintegration in the gastrointestinal tract (GI tract) under the conditions of granule formation.
   Used as the calcium ion (Ca²⁺) source are water-soluble or partially water-soluble calcium salts and various inorganic acids, such as calcium dichloride and calcium glycerophosphate, and also organic acids, such as aliphatic acids (for example, calcium acetate), hydroxy acids (for example, lactic and gluconic acids), and aromatic acids (for example, benzoic, salicylic, and acetyl-o-salicylic acids), in concentrations that ensure a calcium ion (Ca²⁺) concentration within the range of 0.4-1.0% by weight in the bath with the crosslinking agent solution. The calcium salt solutions can be used many times with correction of the calcium ion concentrations, which provides a virtually waste-free process.
- In the second method, a protein/anionic polysaccharide complex consisting of gelatin and sodium alginate (taken in a ratio by weight of 4:1 to 3:2) is used as the water-soluble polymer matrix/binding agent, and water-soluble iron salts are used as the crosslinking agent. When iron salts are used as the crosslinking agent, the crosslinking of the polymer matrix occurs due to the reaction of iron ions with functional groups of gelatin.

In this case, the rate of the crosslinking by iron ions is slower than during crosslinking of the matrix by reacting sodium alginate with calcium ions; this makes it possible to regulate the extent of the crosslinking to control the final properties of the microgranules and the operations of the technological process.

From the physiological standpoint, microgranulation of the feed additive assures its effective preservation in a medium of gastric juice (at a pH ∼ 1.5 in the presence of pepsin) for no more than 1 hour, so that the biologically active substances do not disintegrate, and, on the contrary, its complete destruction in the juice of the duodenum (at a pH ∼ 7.5 in the presence of pancreatin) within no more than 3 hours (to assure the absorption of the additive through the intestinal wall).

The behavior of the microgranulated feed additive based on conifer needle extracts was tested at a temperature of 37 °C in a medium of gastric and intestinal juice. The data are presented in Table 1.

**Table 1. Behavior of Microgranulated Feed Additive in a Medium of Gastric and Intestinal Juice (in vitro)**

| | |
|---|---|
| Exposure to gastric juice | The granules remain whole for 1 hour. The surrounding juice remains clear and colorless. The granules disintegrate completely within 50 minutes. |
| Exposure to intestinal juice | The surrounding juice begins to turn green from the very start of the exposure process. |

The proposed inventions are illustrated by examples.

Table 2 presents compositions, obtained with the use of various water-soluble calcium salts at various weight ratios between the conifer needle extract and the polymer matrix/binding agent, and also at different weight ratios between sodium alginate and gelatin in the binding agent, as well as formulations for the feed additives, reflecting the variation in both the content of components in microgranules and in the nature and content of the calcium salts, used for spatial crosslinking of the polymer matrix, which are in the precipitation bath.

**Table 2**

| Components | Content of Components, % by weight | | | | | | |
|---|---|---|---|---|---|---|---|
| | Example 1 | Example 2 | Example 3 | Example 4 | Example 5 | Example 6 | Example 7 |
| Conifer needle extract (in terms of dry matter) | 80 | 80 | 85 | 85 | 75 | 75 | 80 |
| Sodium alginate (dry matter) | 16 | 12 | 9 | 12 | 15 | 25 | 16 |
| Gelatin (dry matter) | 4 | 8 | 6 | 3 | 10 | 0 | 4 |
| Crosslinking agent (in terms of the Ca²⁺ ion content) | 0.07 | 0.04 | 0.10 | 0.07 | 0.05 | 0.07 | 0.06 |

| Composition of the bath with calcium salts | | | | | | | |
|---|---|---|---|---|---|---|---|
| Name of Salt | Calcium Salt Content, % by weight / Ca²⁺ Ion Content, % by weight | | | | | | |
| | Example 1 | Example 2 | Example 3 | Example 4 | Example 5 | Example 6 | Example 7 |
| Calcium dichloride CaCl₂ | 2.0/0.72 | | | | | | |
| Calcium glycerol-phosphate CaPO₃-O-C₃H₅(OH)₂ | | 2.0/0.4 | | | | | |
| Calcium acetate (CH₃COO)₂Ca | | | 4.0/1.0 | | | | |
| Calcium benzoate (C₆H₅COO)₂Ca | | | | 5.0/0.71 | | | |
| Calcium gluconate (CH₂OH-CHOH)₄-COO)₂Ca | | | | | 5.0/0.46 | | |
| Calcium lactate (CH₃CHOHCOO)₂Ca | | | | | | 4.0/0.72 | |
| Calcium acetyl-salicylate (CH³⁻O-CO-C₆H₄-COO)₂Ca | | | | | | | 6.0/0.6 |

| | | | | | | | |
|---|---|---|---|---|---|---|---|
| Note: Any of the compositions for the calcium salt solutions presented in the table are suitable for forming microgranules with the compositions presented in Examples 1-7. | | | | | | | |

Table 3 presents the compositions, obtained with the use of various water-soluble iron salts at various weight ratios between the conifer needle extract and the polymer matrix/binding agent, and also at different weight ratios between sodium alginate and gelatin in the binding agent, as well as formulations for the feed additives, reflecting the variation in both the content of components in microgranules and in the nature and content of the iron salts, used for spatial crosslinking of the polymer matrix, which are in the precipitation bath.

**Table 3**

| Components | Content of Components, % by weight | | | |
|---|---|---|---|---|
| | Example 8 | Example 9 | Example 10 | Example 11 |
| Conifer needle extract (in terms of dry matter) | 85 | 85 | 80 | 80 |
| Sodium alginate (dry matter) | 9 | 9 | 12 | 12 |
| Gelatin (dry matter) | 6 | 6 | 8 | |
| Crosslinking agent (in terms of the Fe³⁺ ion content) | 0.033 | 0.035 | 0.035 | 0.042 |

| Composition of the bath with iron salts | | | | |
|---|---|---|---|---|
| Name | Iron Salt Content, % by weight / Fe³⁺ Ion Content, % by weight | | | |
| | Example 8 | Example 9 | Example 10 | Example 11 |
| Iron-potassium sulfate (alum) Fe₂(CO₄)₃·KSO₄·24H₂O | 3.0/0.33 | | | |
| Iron sulfate, hydrate Fe₂(SO₄)₃·9H₂O | | 1.8/0.35 | | |
| Iron chloride FeCl₃ | | | 1.0/0.35 | |
| Iron chloride, hydrate FeCl₃·6H₂O | | | | 2.0/0.42 |

| | | | | |
|---|---|---|---|---|
| Note: Any of the compositions for the iron salt solutions presented in the table are suitable for forming microgranules with the compositions presented in Examples 8-11. | | | | |

### CONCLUSIONS

- Microgranules, obtained by the claimed method in an in vitro experiments showed the protective effect-preservation of biologically active components-in gastric juice at the level of the microencapsulated products, whereas in the intestinal juice medium the microgranules disintegrate more rapidly, which promotes their physiological effectiveness.
- The shortening of the production cycle in comparison with the known method (prior art) from a period of less than 1 day with any reactor volume to the short-run formation of microgranules, whose quantity is limited only by the number of filler units/granulators.
- In contrast to the known method, the claimed method can be designed equipment-wise as a continuous process.
- There is virtually no wastewater due to the repeated use of the solutions of crosslinking agents-calcium salts.

The proposed inventions will find use in the sectors of poultry farming, animal husbandry, fur farming, and fish farming in food rations as an effective feed additive.

## Claims

1. The method for producing the feed additive based on the processed conifer needle extracts, which is unique, because it uses the microgranulation of the neutralized conifer needle extract and a water-soluble polymer matrix/binding agent in the form of an aqueous solution, which is combined with the extract; this mixture is then added dropwise to an aqueous solution of a crosslinking agent, whereby sodium alginate or a protein/anionic polysaccharide complex, consisting of gelatin and sodium alginate, is used as the polymer matrix/binding agent, and water-soluble calcium salts are used as the crosslinking agent (the calcium salts ensure the obtainment of an insoluble matrix of microgranules), or a protein/anionic polysaccharide complex, consisting of gelatin and sodium alginate, is used as the polymer matrix/binding agent and water-soluble iron salts are used as the crosslinking agent (the iron salts ensure the obtainment of an insoluble matrix of microgranules):
| | |
|---|---|
| Extracts from conifer needles | 70-90 |
| Polymer matrix/binding agent | 9-25 |
| Crosslinking agent (in terms of calcium ions ca²⁺) | 0.04 - 0.10 or |
| Crosslinking agent (in terms of iron ions Fe³⁺) | 0.05-0.50. |

2. Feed additive obtainable by the method according to claim 1, containing the biologically active substance-conifer needle extracts, **characterized in that** it contains the following components, % by weight (in terms of dry matter):
| | |
|---|---|
| Extracts from conifer needles | 70-90 |
| Polymer matrix/binding agent | 9-25 |
| Crosslinking agent (in terms of calcium ions Ca²⁺) | 0.04 - 0.10 or |
| Crosslinking agent (in terms of iron ions Fe³⁺) | 0.05-0.50. |

3. Feed additive according to claim 2 is unique, because the polymer matrix/binding agent contains sodium alginate or sodium alginate with gelatin, in a weight ratio of 4:1 to 3:2, with the following ratio of components, % by weight: ,
| | |
|---|---|
| Sodium alginate | 9-25 |
| Gelatin | 0-10, |
and water-soluble or partially water-soluble calcium salts as the crosslinking agent.

4. Feed additive according to claim 2 is unique, because the polymer matrix/binding agent contains sodium alginate with gelatin in a weight ratio of 4:1 to 3:2, with the following ratio of components, % by weight:
| | |
|---|---|
| Sodium alginate | 6-18 or |
| Gelatin | 2-12, |
and water-soluble or partially water-soluble iron salts as the crosslinking agent.

5. Feed additive according to claim 2 is unique, because for the calcium ion (Ca²⁺) source it uses water-soluble or partially water-soluble calcium salts and various inorganic acids-calcium dichloride, calcium glycerophosphate, and also organic acids, such as aliphatic acids, for example, calcium acetate, hydroxy acids, for example, lactic and gluconic acids, and aromatic acids, for example, benzoic, salicylic, and acetyl-o-salicylic acids, in concentrations necessary to ensure a calcium ion (Ca²⁺) concentration within the range of 0.4-1.0% by weight in the bath with the crosslinking agent solution.

6. Feed additive according to claim 2 is unique, because for the source of iron ions Fe³⁺ it uses water-soluble or partially water-soluble iron salts and inorganic acids, for example, hydrochloric and sulfuric acid, including mixed salts of the alum type, in concentrations necessary to achieve an iron ion (Fe³⁺) concentration within the range of 0.5-5.0% by weight in the bath with the crosslinking agent solution.

## Patentansprüche

1. Verfahren zum Herstellen eines Futtermittelzusatzes basierend auf verarbeiteten Koniferennadelextrakten, welches einzigartig ist, da es die Mikrogranulation eines neutralisierten Koniferennadelextrakts und ein wasserlösliches Polymermatrix/Bindemittel in der Form einer wässrigen Lösung verwendet, die mit dem Extrakt vereinigt wird; diese Mischung wird dann tropfenweise zu einer wässrigen Lösung eines Vernetzungsmittels gegeben, wobei Natriumalginat oder ein Protein/anionisches Polysaccharid-Komplex, bestehend aus Gelatine und Natriumalginat, als das Polymermatrix/Bindemittel verwendet wird, und wasserlösliche Kalziumsalze werden als Vernetzungsmittel verwendet (die Kalziumsalze stellen die Erzielung einer unlöslichen Matrix von Mikrogranula sicher) oder ein Protein/anionisches Polysaccharid-Komplex, bestehend aus Gelatine und Natriumalginat, wird als das Polymermatrix/Bindemittel verwendet und wasserlösliche Eisensalze werden als das Vernetzungsmittel verwendet (die Eisensalze stellen die Erzielung einer unlöslichen Matrix von Mikrogranula sicher):
| | |
|---|---|
| Koniferennadelextrakte | 70-90 |
| Polymermatrix/Bindemittel | 9-25 |
| Vernetzungsmittel (im Sinne von Kalziumionen Ca²⁺) | 0,04-0,10 oder |
| Vernetzungsmittel (im Sinne von Eisenionen Fe³⁺) | 0,05-0,50. |

2. Futtermittelzusatz, erhältlich durch das Verfahren gemäß Anspruch 1, das die biologisch aktive Substanz - Koniferennadelextrakte - enthält, **dadurch gekennzeichnet, dass** es die folgenden Komponenten enthält in Gew.-% (im Sinne von Trockenmasse):
| | |
|---|---|
| Koniferennadelextrakte | 70-90 |
| Polymermatrix/Bindemittel | 9-25 |
| Vernetzungsmittel (im Sinne von Kalziumionen Ca²⁺) | 0,04-0,10 oder |
| Vernetzungsmittel (im Sinne von Eisenionen Fe³⁺) | 0,05-0,50. |

3. Futtermittelzusatz gemäß Anspruch 2 ist einzigartig, da das Polymermatrix/Bindemittel Natriumalginat oder Natriumalginat mit Gelatine in einem Gewichtsverhältnis von 4:1 bis 3:2 enthält, mit dem folgenden Verhältnis der Komponenten, Gew.-% :
| | |
|---|---|
| Natriumalginat | 9-25 |
| Gelatine | 0-10, |
und wasserlösliche oder teilweise wasserlösliche Kalziumsalze als das Vernetzungsmittel.

4. Futtermittelzusatz gemäß Anspruch 2 ist einzigartig, da das Polymermatrix/Bindemittel Natriumalginat mit Gelatine in einem Gewichtsverhältnis von 4:1 bis 3:2 enthält, mit dem folgenden Verhältnis der Komponenten in Gew.-%:
| | |
|---|---|
| Natriumalginat | 6-18 oder |
| Gelatine | 2-12, |
und wasserlösliche oder teilweise wasserlösliche Eisensalze als das Vernetzungsmittel.

5. Futtermittelzusatz gemäß Anspruch 2 ist einzigartig, da es für die Kalziumionen (Ca²⁺)-Quelle wasserlösliche oder teilweise wasserlösliche Kalziumsalze und zahlreiche anorganische Säuren - Kalziumdichlorid, Kalziumglycerolphosphat und auch organische Säuren, wie aliphatische Säuren, z.B. Kalziumacetat, Hydroxysäuren, z.B. Milch- und Gluconsäuren, und aromatische Säuren, z.B. Benzoe-, Salizyl- und Acetyl-o-Salizylsäuren, verwendet, in Konzentrationen, die notwendig sind, um eine Kalziumionen (Ca²⁺)-Konzentration in dem Bereich von 0,4-1,0 Gew.-% in dem Bad mit der Vernetzungsmittellösung sicherzustellen.

6. Futtermittelzusatz gemäß Anspruch 2 ist einzigartig, da es für die Quelle von Eisenionen Fe³⁺ wasserlösliche oder teilweise wasserlösliche Eisensalze und anorganische Säuren, z.B. Chlorwasserstoff- und Schwefelsäure, einschließlich gemischten Salzen des Alauntyps verwendet, in Konzentrationen, die notwendig sind, um eine Eisenionen (Fe³⁺)-Konzentration in dem Bereich von 0,5-5,0 Gew.-% in dem Bad mit der Vernetzungsmittellösung zu erzielen.

## Revendications

1. Procédé de production d'un additif alimentaire à base d'extraits d'aiguilles de conifères traités, qui est unique car il utilise la microgranulation de l'extrait d'aiguille de conifère neutralisé et d'un liant/d'une matrice polymère soluble à l'eau sous la forme d'une solution aqueuse, qui est combiné(e) à l'extrait ; ce mélange est ensuite ajouté goutte à goutte à une solution aqueuse d'un agent de réticulation, moyennant quoi de l'alginate de sodium ou un complexe polysaccharide anionique/une protéine, composé(e) de gélatine et d'alginate de sodium, est utilisé(e) comme liant/matrice polymère, et des sels de calcium solubles à l'eau sont utilisés comme agent de réticulation (les sels de calcium garantissent l'obtention d'une matrice insoluble de microgranules), ou un complexe polysaccharide anionique/une protéine, composé(e) de gélatine et d'alginate de sodium, est utilisé(e) comme liant/matrice polymère et des sels de fer solubles à l'eau sont utilisés comme agent de réticulation (les sels de fer garantissent l'obtention d'une matrice insoluble de microgranules) :
| | |
|---|---|
| Extraits d'aiguilles de conifères | 70-90 |
| Liant/matrice polymère | 9-25 |
| Agent de réticulation (en termes d'ions calcium Ca²⁺) | 0,04-0,10 |
| Agent de réticulation (en termes d'ions fer Fe³⁺) | 0,05-0,50 |

2. Additif alimentaire pouvant être obtenu grâce au procédé selon la revendication 1, comprenant la substance biologiquement active - extraits d'aiguilles de conifères, **caractérisé en ce qu'**il comprend les éléments suivants, en % en poids (en termes de matière sèche) :
| | |
|---|---|
| Extraits d'aiguilles de conifères | 70-90 |
| Liant/matrice polymère | 9-25 |
| Agent de réticulation (en termes d'ions calcium Ca²⁺) | 0,04-0,10 |
| Agent de réticulation (en termes d'ions fer Fe³⁺) | 0,05-0,50 |

3. Additif alimentaire selon la revendication 2, qui est unique car le liant/la matrice polymère contient de l'alginate de sodium ou de l'alginate de sodium avec de la gélatine, dans un rapport massique pouvant aller de 4:1 à 3:2, comprenant les éléments suivants dans les proportions suivantes, en % en poids :
| | |
|---|---|
| Alginate de sodium | 9-25 |
| Gélatine | 0-10 |
et des sels de calcium solubles à l'eau ou partiellement solubles à l'eau comme agent de réticulation.

4. Additif alimentaire selon la revendication 2, qui est unique car le liant/la matrice polymère contient de l'alginate de sodium avec de la gélatine dans un rapport massique pouvant aller de 4:1 à 3:2, comprenant les éléments suivants dans les proportions suivantes, en % en poids :
| | |
|---|---|
| Alginate de sodium | 6-18 ou |
| Gélatine | 2-12 |
et des sels de fer solubles à l'eau ou partiellement solubles à l'eau comme agent de réticulation.

5. Additif alimentaire selon la revendication 2, qui est unique car, pour la source d'ions calcium (Ca²⁺), il utilise des sels de calcium solubles à l'eau ou partiellement solubles à l'eau et divers acides inorganiques - du bichlorure de calcium, du glycérophosphate de calcium, et également des acides organiques, comme des acides aliphatiques, par exemple, de l'acétate de calcium, des hydroxy acides, par exemple, des acides lactiques et gluconiques, et des acides aromatiques, par exemple des acides benzoïques, salicyliques et acétylsalicyliques, dans des concentrations nécessaires pour assurer une concentration en ions calcium (Ca²⁺) comprise dans la plage allant de 0,4 à 1,0 % en poids dans le bain avec la solution d'agent de réticulation.

6. Additif alimentaire selon la revendication 2, qui est unique car, pour la source d'ions fer Fe³⁺, il utilise des sels de fer solubles à l'eau ou partiellement solubles à l'eau et des acides inorganiques, par exemple de l'acide chlorhydrique et sulfurique, comprenant des sels mélangés du type alun, dans des concentrations nécessaires pour obtenir une concentration d'ions fer (Fe³⁺) comprise dans la plage allant de 0,5 à 5,0 % en poids dans le bain avec la solution d'agent de réticulation.
